# EUROPEAN PATENT APPLICATION

(11) **EP 2 624 608 A1**
(43) Date of publication of application: **07.08.2013**
(21) Application number: 11827961.1
(22) Date of filing: 13.05.2011
(51) Int. Cl.: H04W 8/00

(54) **METHOD AND SYSTEM FOR CONTROLLING STARTUP OF COMPRESSED MODE**

(30) Priority: 29.09.2010 CN 201010505978
(71) Applicant: ZTE Corporation, Shenzhen, Guangdong 518057 (CN)
(72) Inventor: SHI, Lirong, Guangdong 518057 (CN); HE, Meifang, Guangdong 518057 (CN)
(74) Representative: Rapisardi, Mariacristina
(86) International application number: PCT/CN2011/074062
(87) International publication number: WO 2012/041065

(57) **Abstract**

The present invention provides a method and a system for controlling start of a compressed mode. The method comprises the following steps: when User Equipment (UE) performs an inter-frequency measurement or an inter-system measurement, the UE determines that a network side indicates the UE not to start the compressed mode, according to a measurement control message received from the network side (S102); for N downlink auxiliary carriers of the downlink auxiliary carriers other than the downlink auxiliary carriers corresponding to the uplink auxiliary carriers, the UE does not start the compressed mode, wherein N is greater than or equal to 1 (S104). The present invention ensures continuity of calls, increases utilization ratio of system resources and improves system performance.

## Description

### Field of the Invention

The present invention relates to the field of communication, and in particular to a method and a system for controlling start of a compressed mode.

### Background of the Invention

In related cellular mobile communication systems, in order to improve the utilization ratio of the spectrum resources and the capacity of the entire system, the transmit power of a base station in the system is limited within a cell. During the process of User Equipment (UE) moving from one cell to another cell, the signal of the source cell received by the UE must be weaker and weaker, but the signal of the cell that the UE is entering (that is, the target cell) received by the UE becomes stronger and stronger. In order to guarantee the communication quality of the UE, it is necessary to switch the UE to the new cell. In the Frequency Division Multiplex (FDD) mode, in order to complete the different-frequency handover, the FDD - Time Division Multiplex (TDD) handover or the inter-system handover, it is necessary to measure the target cell of the handover. If the downlink signal is always occupied in the time domain, then the downlink data needs to be received continuously. Thus, for the UE having only one set of transceiver, a mechanism which can generate some idle slots in the downlink wireless frame is needed. This is called a compressed mode.

The downlink compressed mode uses various techniques to form a period of transmission data "gap" in the data frames of the air interface. During this gap, the base station does not transmit any data and the UE does not receive data. In this way, the UE can take this period of time to perform measurement. However, when the downlink compressed mode is used, if the uplink frequency of the UE is always being used to transmit data and the measured frequency is close to the uplink frequency, the uplink transmit frequency probably would interfere with the measured frequency. Thus, in order to guarantee the accuracy of the measurement, it is needed to stop uplink transmitting during this gap. This is called the uplink compressed mode.

The method commonly adopted for the uplink compressed mode includes: spread factor halving, puncturing and high-layer scheduling. The downlink compressed mode can adopt the above methods other than the puncturing method. Since the compressed mode would impact the performance of the system, some UE transceivers capable of receiving multiple carrier-frequency signals appear in related arts gradually. In this way, it is possible that the compressed mode is not started when the inter-frequency measurement or inter-system measurement is performed.

For a terminal supporting Dual Carrier High Speed Downlink Packet Access (DC-HSDPA) function, the downlink auxiliary carrier measurement is expressed through the information element of adjacent frequency measurements without compressed mode. If this information element is contained, it indicates that the UE does not need to start the compressed mode when performing adjacent frequency measurements. If this information element is not contained, it indicates that the UE needs to start the compressed mode when performing adjacent frequency measurements. Also, the downlink auxiliary carrier measurement is expressed through the information element of Inter-band frequency measurements without compressed mode. If this information element is contained, it indicates that the UE does not need to start the compressed mode when measuring different-band carriers. If this information element is not contained, it indicates that the UE needs to start the compressed mode when measuring different-band carriers.

With the development of techniques, it is expected to introduce the Multi-Carrier HSDPA technique to the related systems. This enables a terminal to receive data on three or four carriers with the HSDPA technique, so that the downlink data rate is increased by many times. Taking a 4C-HSDPA system for example, the downlink has four carriers (including one main carrier and three auxiliary carriers). Thus, the measurement capability of the terminal needs to be improved so that the terminal can monitor three carriers simultaneously.

However, in the related arts above, when different combinations of downlink carrier and uplink carrier are adopted in the condition that the inter-frequency measurement or inter-system measurement is needed, the system cannot change a serving cell in time and calls are dropped.

### Summary of the Invention

The main purpose of the present invention is to provide a scheme for controlling start of a compressed mode, to at least solve the above problem that calls are dropped for the UE adopts different combinations of downlink carrier and uplink carrier in the condition that inter-frequency measurement or inter-system measurement is needed.

In order to achieve the purpose above, a method for controlling start of a compressed mode is provided according to one aspect of the present invention. The method for controlling start of the compressed mode according to the present invention includes the following steps: when an User Equipment (UE) performs an inter-frequency measurement or an inter-system measurement, the UE determining that a network side indicates the UE not to start the compressed mode, according to a measurement control message received from the network side; and the UE not starting the compressed mode for N downlink auxiliary carriers of the downlink auxiliary carriers other than the downlink auxiliary carriers corresponding to the uplink auxiliary carriers, wherein N is greater than or equal to 1.

Preferably, the UE determines the number N of the downlink auxiliary carriers for which the compressed mode is not to be started, according to the number of carriers of simultaneous multi-carrier measurement supported by the UE and the number of uplink carriers.

Preferably, N satisfies a formula of: N=M-K, wherein M represents the number of the carriers of simultaneous multi-carrier measurement supported by the UE, and K represents the number of the uplink carriers.

Preferably, when the number of downlink carriers is 4 and the number of uplink carriers is 2, in a condition that the number of carriers of simultaneous multi-carrier measurement supported by the UE is 3, the UE does not start the compressed mode for 1 downlink auxiliary carrier of the downlink auxiliary carriers other than the downlink auxiliary carriers corresponding to the uplink auxiliary carriers; and in a condition that the number of the carriers of simultaneous multi-carrier measurement supported by the UE is 4, the UE does not start the compressed mode for 2 downlink auxiliary carriers of the downlink auxiliary carriers other than the downlink auxiliary carriers corresponding to the uplink auxiliary carriers.

Preferably, when the number of downlink carriers is 3 and the number of uplink carriers is 2, in a condition that the number of carriers of simultaneous multi-carrier measurement supported by the UE is 3, the UE does not start the compressed mode for 1 downlink auxiliary carrier of the downlink auxiliary carriers other than the downlink auxiliary carriers corresponding to the uplink auxiliary carriers.

Preferably, when the number of downlink carriers is 4 and the number of uplink carriers is 1, in a condition that the number of carriers of simultaneous multi-carrier measurement supported by the UE is 3, the UE does not start the compressed mode for 2 downlink auxiliary carriers of the downlink auxiliary carriers other than the downlink auxiliary carriers corresponding to the uplink auxiliary carriers; and in the condition that the number of the carriers of simultaneous multi-carrier measurement supported by the UE is 4, the UE does not start the compressed mode for 3 downlink auxiliary carriers of the downlink auxiliary carriers other than the downlink auxiliary carriers corresponding to the uplink auxiliary carriers.

Preferably, before the UE determining that the network side indicates the UE not to start the compressed mode according to the measurement control message received from the network side, the method further comprises: the network side judging whether a multi-carrier measurement capability of the UE meets a requirement of the inter-frequency measurement or the inter-system measurement; and if yes, the network side indicating the UE not to start the compressed mode through the measurement control message; otherwise, the network side indicating the UE to start the compressed mode through the measurement control message.

Preferably, before the UE determining that the network side indicates the UE not to start the compressed mode according to the measurement control message received from the network side, the method further comprises: in a condition that a wireless quality measured by the UE meets a preset condition, the network side indicating the UE not to start the compressed mode through the measurement control message.

Preferably, the wireless quality measured by the UE meets the preset condition comprises: a transmit power of a pilot frequency measured by the UE being greater than a preset threshold.

Preferably, the UE determining that the network side indicates the UE not to start the compressed mode according to the measurement control message received from the network side comprises: the UE determining that the network side indicates the UE not to start the compressed mode according to information of the compressed mode in the measurement control message, wherein the information of the compressed mode is a Dedicated Physical Channel (DPCH) compressed mode status info information element.

Preferably, the UE determining that the network side indicates the UE not to start the compressed mode according to the information of the compressed mode in the measurement control message comprises: the UE determining that the network side indicates the UE not to start the compressed mode according to value of an indication information element in the information of the compressed mode.

Preferably, the DPCH compressed mode status info informaiton elelemnt comprises at least one of: reconfiguration connection frame number of transmission gap pattern sequence, identifier of transmission gap pattern sequence, and status indication of transmission gap pattern sequence. Preferably, before the UE determining that the network side indicates the UE not to start the compressed mode according to the measurement control message received from the network side, the method further comprises: the UE reporting the multi-carrier measurement capability to the network side.

Preferably, the UE reporting the multi-carrier measurement capability to the network side comprises: the UE carrying a multi-carrier information element which indicates not to start the compressed mode in a message supporting the multi-carrier capability to report to the network side, wherein the message supporting the multi-carrier capability comprises at least one of: newly added Radio Resource Control (RRC) message, radio network resource connection setup complete message, and radio apparatus capability information message. Preferably, before the UE determining that the network side indicates the UE not to start the compressed mode according to the measurement control message received from the network side, the method further comprises: the network side sending a command for querying the multi-carrier measurement capability of the UE to the UE; and the UE returning the multi-carrier measurement capability of the UE to the network side according to the received command.

In order to achieve the purpose above, a system for controlling start of a compressed mode is provided according to another aspect of the present invention.

The system for controlling start of the compressed mode according the present invention includes: a User Equipment (UE) and a network side apparatus, wherein the UE comprises: a first determination module, configured to determine that the network side apparatus indicates the UE not to start the compressed mode according to a measurement control message received from the network side apparatus, when the UE performs an inter-frequency measurement or an inter-system measurement; and a processing module, configured to not start the compressed mode for N downlink auxiliary carriers of the downlink auxiliary carriers other than the downlink auxiliary carriers corresponding to the uplink auxiliary carriers, wherein N is greater than or equal to 1.

Preferably, the UE further comprises: a second determination module, configured to determine the number N of the downlink auxiliary carriers for which the compressed mode is not to be started, according to the number of carriers of simultaneous multi-carrier measurement supported by the UE and the number of uplink carriers.

Preferably, the network side apparatus comprises: a judgment module, configured to judge whether a multi-carrier measurement capability of the UE meets a requirement of the inter-frequency measurement or the inter-system measurement; and an indication module, configured to indicate the UE not to start the compressed mode through the measurement control message, in a condition that the judgment module judges that the multi-carrier measurement capability of the UE meets the requirement of the inter-frequency measurement or the inter-system measurement, and to indicate the UE to start the compressed mode through the measurement control message, in a condition that the judgment module judges that the multi-carrier measurement capability of the UE does not meet the requirement of the inter-frequency measurement or the inter-system measurement.

Preferably, the indication module is further configured to indicate the UE not to start the compressed mode through the measurement control message, in a condition that a transmit power of a pilot frequency measured by the UE is greater than a preset threshold.

Preferably, the first determination module is further configured to determine that the network side apparatus indicates the UE not to start the compressed mode according to information of the compressed mode in the measurement control message, wherein the information of the compressed mode is a Dedicated Physical Channel (DPCH) compressed mode status info information element. Preferably, the first determination module is further configured to determine that the network side apparatus indicates the UE not to start the compressed mode according to value of an indication information element in the information of the compressed mode.

Preferably, the UE further comprises: a report module, configured to report the multi-carrier measurement capability to the network side apparatus.

Preferably, the report module is further configured to carry a multi-carrier information element which indicates not to start the compressed mode in a message supporting the multi-carrier capability to report to the network side apparatus, wherein the message supporting the multi-carrier capability comprises at least one of: newly added Radio Resource Control (RRC) message, radio network resource connection setup complete message, and radio apparatus capability information message.

Preferably, the network side apparatus further comprises: a first sending module, configured to send a command for querying the multi-carrier measurement capability of the UE to the UE; and the UE further comprises: a second sending module, configured to return the multi-carrier measurement capability of the UE to the network side apparatus according to the received command.

Preferably, the network side apparatus is a Radio Network Controller (RNC). With the present invention, the UE does not start the compressed mode for the downlink auxiliary carriers other than the downlink auxiliary carriers corresponding to the uplink auxiliary carriers. Thus, this solution solves the problem that calls are dropped for the UE which adopts different combinations of downlink carrier and uplink carrier in the condition that inter-frequency measurement or inter-system measurement is needed. The continuity of calls is ensured, the utilization ratio of system resources is increased and the system performance is improved.

### Brief Description of the Drawings

The drawings described herein are provided for a better understanding of the present invention, and constitute one part of the application. The schematic embodiments of the present invention and the description thereof are used to illustrate the present invention, but to limit the present invention improperly. In the drawings:
Fig. 1 shows a flowchart of a method for controlling start of a compressed mode according to the embodiment of the present invention;
Fig. 2 shows a structure diagram of a system for controlling start of a compressed mode according to the embodiment of the present invention;
Fig. 3 shows a structure diagram of a system for controlling start of a compressed mode according to the preferred embodiment of the present invention;
Fig. 4 shows a flowchart of a method for controlling start of a compressed mode according to the preferred Embodiment 1 of the present invention;
Fig. 5 shows a flowchart of a method for transmitting UE multi-frequency measurement capability according to the preferred Embodiment 2 of the present invention;
Fig. 6 shows a flowchart of a method for transmitting UE multi-frequency measurement capability according to the preferred Embodiment 3 of the present invention; and
Fig. 7 shows a flowchart of a method of an RNC transmitting a measurement control message according to the preferred Embodiment 4 of the present invention.

### Detailed Description of the Embodiments

The present invention is described below in detail with reference to the drawings and in conjunction with embodiments. It should be noted that the embodiments in the application and the features of the embodiments can be combined with each other if no conflict is caused.

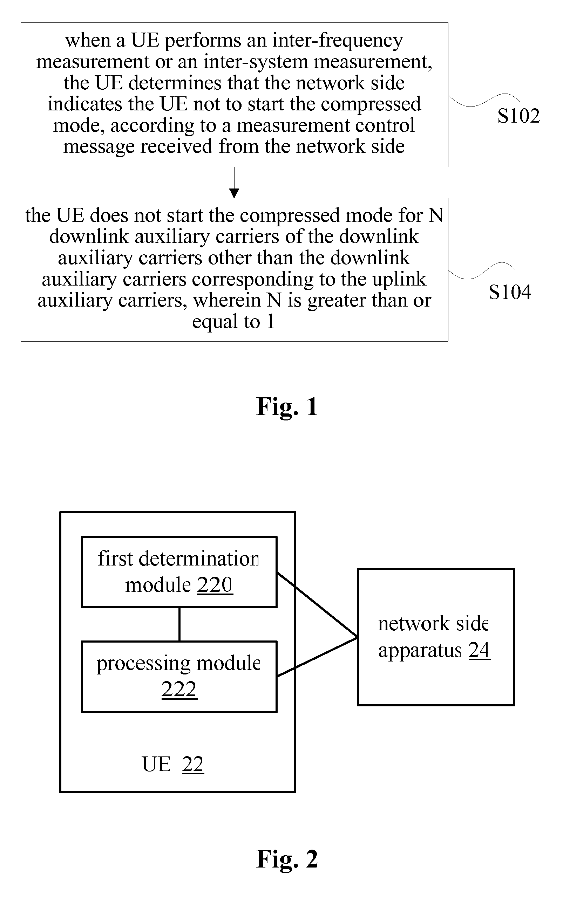

According to the embodiment of the present invention, a method for controlling start of a compressed mode is provided. Fig. 1 shows a flowchart of the method for controlling start of the compressed mode according to the embodiment of the present invention. As shown in Fig. 1, the method includes the following steps.

Step S102: when a UE performs an inter-frequency measurement or an inter-system measurement, the UE determines that the network side indicates the UE not to start the compressed mode, according to a measurement control message received from the network side.

Step S104: the UE does not start the compressed mode for N downlink auxiliary carriers of the downlink auxiliary carriers other than the downlink auxiliary carriers corresponding to the uplink auxiliary carriers, wherein N is greater than or equal to 1.

Through the steps above, the UE does not start the compressed mode for the downlink auxiliary carriers other than the downlink auxiliary carriers corresponding to the uplink auxiliary carriers. Thus, this solution solves the problem that calls are dropped for the UE which adopts different combinations of downlink carrier and uplink carrier in the condition that inter-frequency measurement or inter-system measurement is needed. The continuity of calls is ensured, the utilization ratio of system resources is increased and system performance is improved.

It should be noted that the multi-frequency measurement capability of the UE in the embodiment of the present invention refers to the enhancement capability of performing different-frequency measurements without starting the compressed mode.

Preferably, the UE determines the number N of downlink auxiliary carriers for which the compressed mode is not to be started, according to the number of carriers of simultaneous multi-carrier measurement supported by the UE and the number of uplink carriers. This method provides the basis for determining the number of auxiliary carriers on which the compressed mode is not started, and has strong operability.

Preferably, N can satisfy the following formula: N=M-K, wherein M represents the number of carriers of simultaneous multi-carrier measurement supported by the UE, and K represents the number of uplink carriers.

For example, Case 1: when the number of downlink carriers is 4 and the number of uplink carriers is 2, in the condition that the number of carriers of simultaneous multi-carrier measurement supported by the UE is 3, the UE does not start the compressed mode for 1 downlink auxiliary carrier of the downlink auxiliary carriers other than the downlink auxiliary carriers corresponding to the uplink auxiliary carriers; and in the condition that the number of carriers of simultaneous multi-carrier measurement supported by the UE is 4, the UE does not start the compressed mode for 2 downlink auxiliary carriers of the downlink auxiliary carriers other than the downlink auxiliary carriers corresponding to the uplink auxiliary carriers.

Case 2: when the number of downlink carriers is 3 and the number of uplink carriers is 2, in the condition that the number of carriers of simultaneous multi-carrier measurement supported by the UE is 3, the UE does not start the compressed mode for 1 downlink auxiliary carrier of the downlink auxiliary carriers other than the downlink auxiliary carriers corresponding to the uplink auxiliary carriers.

Case 3: when the number of downlink carriers is 4 and the number of uplink carriers is 1, in the condition that the number of carriers of simultaneous multi-carrier measurement supported by the UE is 3, the UE does not start the compressed mode for 2 downlink auxiliary carriers of the downlink auxiliary carriers other than the downlink auxiliary carriers corresponding to the uplink auxiliary carriers; and in the condition that the number of carriers of simultaneous multi-carrier measurement supported by the UE is 4, the UE does not start the compressed mode for 3 downlink auxiliary carriers of the downlink auxiliary carriers other than the downlink auxiliary carriers corresponding to the uplink auxiliary carriers.

Preferably, before step S102, the network side judges whether the multi-carrier measurement capability of the UE meets the requirement of the inter-frequency measurement or the inter-system measurement. If yes, the network side indicates the UE not to start the compressed mode through the measurement control message. Otherwise, the network side indicates the UE to start the compressed mode through the measurement control message. This method enables the UE not to start the compressed mode in some conditions. Thus, the efficiency of system resources is improved.

During the specific implementation, the process of the network side determining whether the UE needs to start the compressed mode can be that: if the multi-frequency measurement capability of the UE meets the requirement of the inter-frequency/inter-system measurement, the UE does not need to start the compressed mode; and if the multi-frequency measurement capability of the UE does not meet the requirement, the UE needs to start the compressed mode. Alternatively, if the wireless quality meets the preset condition and the number of multi-frequency measurements for which the UE does not start the compressed mode meets the requirement of the inter-frequency/inter-system measurement, the UE does not need to start the compressed mode.

Preferably, before step S102, in the condition that the wireless quality measured by the UE meets the preset condition, the network side indicates the UE not to start the compressed mode through the measurement control message. This method lists the condition in which the UE does not start the compressed mode. Thus, the operability of the implementation is improved.

Preferably, the above preset condition, which the wireless quality measured by the UE meets, can include: the transmit power of the pilot frequency measured by the UE is greater than a preset threshold. This method is simple to implement, and has strong operability.

Preferably, in step S102, the UE determines that the network side indicates the UE not to start the compressed mode according to the information of the compressed mode in the measurement control message, wherein the information of the compressed mode is a DPCH Compressed Mode Status Info information element.

For example, the UE determines that the network side indicates the UE not to start the compressed mode, according to the value of the indication information element (that is, status indication information element) in the information of the compressed mode. If the status indication information element is Activate, the UE starts the compressed mode to perform the inter-frequency measurement or inter-system measurement. Otherwise, if the status indication information element is Deactivate, the UE does not start the compressed mode. This method provides details about in what condition the UE needs to start the compressed mode and in what condition the UE does not need to start the compressed mode. Thus, this solution provides a specific implementation process and improves the system practicability, and has strong operability. Preferably, the status indication information element can be the status indication of transmission gap pattern sequence.

Preferably, the DPCH Compressed Mode Status Info information element includes at least one of the following: the reconfiguration connection frame number of transmission gap pattern sequence, the identifier of transmission gap pattern sequence, and the status indication of transmission gap pattern sequence. This method is simple to implement, and has strong operability. Preferably, before step S102, the UE reports the multi-frequency measurement capability to the network side. This method provides an approach for the network side acquiring the multi-frequency measurement capability of the UE. Thus, system practicality is improved.

Preferably, the UE reporting the multi-frequency measurement capability to the network side may include that: the UE carries the multi-carrier information element which indicates not to start the compressed mode in a message supporting the multi-carrier capability to report to the network side, wherein the message supporting the multi-carrier capability includes at least one of the following: the newly added RRC message, the Radio Network Resource Connection Setup Complete message, and the Radio Apparatus Capability Information message.

In this preferred embodiment, the UE actively reports the multi-frequency measurement capability of itself (that is, the UE does not start compressed mode), so that the network side can acquire the multi-frequency measurement capability of the UE. Thereby, the network side can control the UE to start or not to start the compressed mode. Thus, the system flexibility is improved. During the specific implementation process, the UE can carry the multi-frequency measurement information in a newly added RRC message, or in a related Radio Network Resource Connection Setup Complete message or Radio Apparatus Capability Information message (that is, extending the Radio Network Resource Connection Setup Complete message or the Radio Apparatus Capability Information message), to notify the network side of the multi-frequency measurement capability of the UE.

Preferably, before step S102, the network side sends a command for querying the multi-carrier measurement capability of the UE to the UE. And, the UE returns the multi-carrier measurement capability of the UE to the network side according to the received command. In this method, the UE passively reports the multi-carrier measurement capability after receiving the query command from the network side. This method provides another approach for the network side to acquire the multi-carrier measurement capability of the UE. Thus, the system flexibility is improved.

It should be noted that, in this embodiment of the present invention, the UE reports the multi-frequency measurement capability to the network side (for example, RNC). When the UE needs to perform the inter-frequency/inter-system measurement, the UE starts or does not start the compressed mode according to the measurement control message transmitted by the RNC. When the UE has the multi-frequency measurement capability and performs a different-frequency measurement, the UE does not need to start the compressed mode for 1 or 2 or more than 2 uplink/downlink carriers other than the downlink main carrier and the downlink auxiliary carriers corresponding to the uplink sub-cells (the auxiliary carriers) (that is, the downlink auxiliary carriers other than the downlink auxiliary carriers corresponding to the uplink auxiliary carriers).

Corresponding to the method above, a system for controlling start of a compressed mode is further provided in this embodiment. Fig. 2 shows a structure diagram of the system for controlling start of the compressed mode according to the embodiment of the present invention. As shown in Fig. 2, the system 20 includes a UE 22 and a network side apparatus 24. The UE 22 includes: a first determination module 220, configured to determine that the network side apparatus 24 indicates the UE not to start the compressed mode according to a measurement control message received from the network side apparatus 24, when the UE performs an inter-frequency measurement or an inter-system measurement; and a processing module 222, coupled to the first determination module 220 and configured to not start the compressed mode for N downlink auxiliary carriers of the downlink auxiliary carriers other than the downlink auxiliary carriers corresponding to the uplink auxiliary carriers, wherein N is greater than or equal to 1.

Through the system above, the UE 22 does not start the compressed mode for the downlink auxiliary carriers other than the downlink auxiliary carriers corresponding to the uplink auxiliary carriers. Thus, this solution solves the problem that calls are dropped for the UE 22 which adopts different combinations of downlink carrier and uplink carrier in the condition that inter-frequency measurement or inter-system measurement is needed. The continuity of calls is ensured, the utilization ratio of system resources is increased and the system performance is improved.

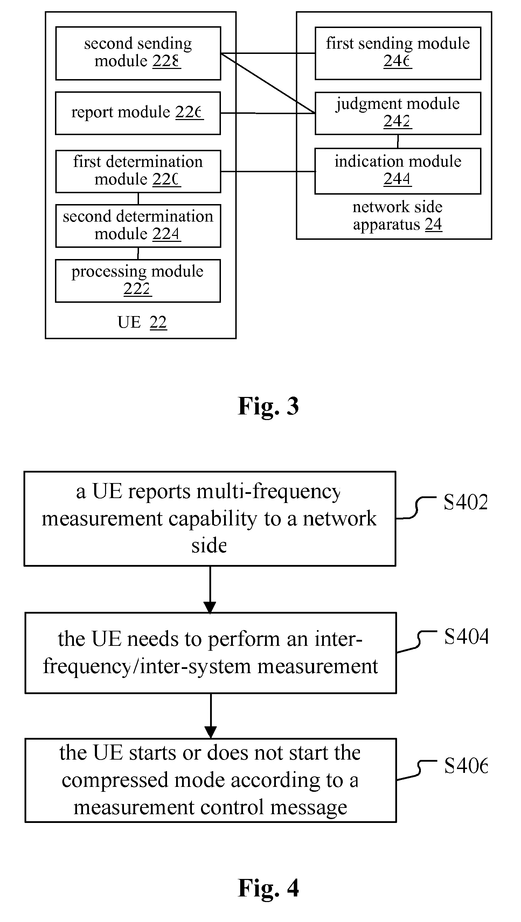

Fig. 3 shows a structure diagram of the system for controlling start of the compressed mode according to the preferred embodiment of the present invention. As shown in Fig. 2, the UE 22 further includes: a second determination module 224, coupled to the first determination module 220 and the processing module 222, and configured to determine the number N of downlink auxiliary carriers for which the compressed mode is not to be started according to the number of carriers of simultaneous multi-carrier measurement supported by the UE and the number of uplink carriers.

Preferably, the network side apparatus 24 includes: a judgment module 242, configured to judge whether the multi-carrier measurement capability of the UE 22 meets the requirement of the inter-frequency measurement or the inter-system measurement; an indication module 244, coupled to the judgment module 242 and the first determination module 220, and configured to indicate the UE 22 not to start the compressed mode through the measurement control message in the condition that the judgment module 242 judges that the multi-carrier measurement capability of the UE 22 meets the requirement of the inter-frequency measurement or the inter-system measurement, and to indicate the UE 22 to start the compressed mode through the measurement control message in the condition that the judgment module 242 judges that the multi-carrier measurement capability of the UE 22 does not meet the requirement of the inter-frequency measurement or the inter-system measurement.

Preferably, the indication module 244 is further configured to indicate the UE 22 not to start the compressed mode through the measurement control message, in the condition that the transmit power of pilot frequency measured by the UE 22 is greater than a preset threshold.

Preferably, the first determination module 220 is further configured to determine that the network side apparatus 24 indicates the UE 22 not to start the compressed mode according to the information of the compressed mode in the measurement control message, wherein the information of the compressed mode is a DPCH Compressed Mode Status Info information element. Preferably, the first determination module 220 is further configured to determine that the network side apparatus 24 indicates the UE 22 not to start the compressed mode according to the value of an indication information element in the information of the compressed mode.

Preferably, the UE 22 further includes: a report module 226, coupled to the judgment module 242 and configured to report the multi-frequency measurement capability to the network side apparatus 24.

During the specific implementation process, reporting the multi-frequency measurement capability to the network side apparatus 24 may include the following implementation process. Method 1: the network side apparatus 24 sends to the UE 22 a command for querying the multi-frequency measurement capability, and the UE 22 returns the multi-frequency measurement capability of itself to the network side apparatus 24 according to the command for querying the multi-frequency measurement capability. Method 2: the UE 22 actively notifies the multi-frequency measurement capability to the network side apparatus 24. For example, the UE 22 actively notifying the multi-frequency measurement capability to the network side apparatus 24 may include that: the UE 22 notifies the multi-frequency measurement capability to the network side apparatus 24 through a newly added RRC message, or notifies the multi-frequency measurement capability to the network side apparatus 24 by extending a related RRC message. The UE extending the related RRC message and notifying the multi-frequency measurement capability to the network side apparatus 24 may include that: the UE 22 extends a Radio Network Resource Connection Setup Complete message or a Radio Apparatus Capability Information message, so that the message carries an information element of multi-frequency measurements supported indication without compressed mode.

Preferably, the report module 226 is further configured to carry a multi-carrier information element which indicates not to start the compressed mode in a message supporting the multi-carrier capability to report to the network side apparatus 24, wherein the message supporting the multi-carrier capability includes at least one of the following: the newly added RRC message, the Radio Network Resource Connection Setup Complete message, and the Radio Apparatus Capability Information message.

During the specific implementation process, when the UE 22 has the multi-frequency measurement capability, the message carrying the multi-frequency measurement capability of the UE can be a newly added message, or can be extended from a related message, such as the RRC Connection Setup Complete message or the UE Capability Information message.

Preferably, the network side apparatus 24 further includes: a first sending module 246, configured to send a command for querying the multi-carrier measurement capability of the UE to the UE 22. The UE 22 further includes: a second sending module 228, coupled to the first sending module 246 and the judgment module 242, and configured to return the multi-carrier measurement capability of the UE to the network side apparatus 24 according to the received command.

For example, an information element of multi Frequency measurements indication without compressed mode, which is supported by the UE, can be added into the message carrying the multi-frequency capability supported by the UE, for indicating the multi-frequency measurement capability of the UE.

Preferably, the network side apparatus 24 is an RNC.

It should be noted that when the UE 22 reports the multi-frequency measurement capability to the network side apparatus 24 (for example, the RNC), and when the UE needs to perform the inter-frequency/inter-system measurement, the UE 22 starts or does not start the compressed mode according to the measurement control message transmitted by the RNC. If the measurement control message does not carry the information of the compressed mode, when performing the different-frequency measurement, the UE 22 does not need to start the compressed mode for 1 or 2 or more than 2 carriers other than the downlink main carrier and the downlink auxiliary carriers corresponding to the uplink sub-cells. When the UE 22 needs to perform the inter-frequency/inter-system measurement, the UE 22 is determined and controlled to start or not to start the compressed mode according to the multi-carrier measurement capability of the UE 22.

The implementation process of the embodiments of the present invention is described below in detail in conjunction with the above preferred implementations.

### Preferred Embodiment 1

In this preferred embodiment, an implementation is provided for the method for controlling start of the compressed mode. Fig. 4 shows a flowchart of the method for controlling start of the compressed mode according to the preferred Embodiment 1 of the present invention. As shown in Fig. 4, the process mainly includes the following steps (step S402 to step S406).

Step S402: a UE reports multi-frequency measurement capability to a network side. For example, the multi-frequency measurement capability of the UE can be acquired by an RNC of the network side, and the corresponding control can be performed.

During the specific implementation process, the network side can acquire the multi-frequency measurement capability of the UE through two methods. Method 1: the network side sends to the UE a command for querying the multi-frequency measurement capability, and the UE returns the multi-frequency measurement capability of itself to the network side according to the command for querying the multi-frequency measurement capability. Method 2: the UE actively notifies the multi-frequency measurement capability to the network side. Here, the UE can notify the multi-frequency measurement capability to the network side through a newly added RRC message, and also can notify the multi-frequency measurement capability to the network side by extending a related RRC message. For example, the RRC Connection Setup Complete message or the UE Capability Information message can be extended, so that the message carries an information element of multi-frequency measurements indication without compressed mode. The value of the information element can be true. When performing a different-frequency measurement, the UE does not need to start the compressed mode for 1 or 2 or more than 2 uplink/downlink auxiliary carriers other than the downlink main carrier and the downlink auxiliary carriers corresponding to the uplink auxiliary carriers.

During the specific implementation process, an information element of multi-frequency measurements indication without compressed mode, which is supported by the UE, can be added into the message carrying the multi-frequency capability supported by the UE, for indicating the multi-frequency measurement capability of the UE. The corresponding protocol description is as shown in Table 1.

**Table 1**

| Information Element / Group Name | Needed? | Multiple? | Type and Reference |
|---|---|---|---|
| Multi-frequency measurements indication without compressed mode | Optional | | Enumerated (true) |

As shown in Table 1, the message carries the information element of multi-frequency measurements indication without compressed mode.

Step S404: the UE needs to perform an inter-frequency/inter-system measurement.

Step S406: the UE starts or does not start the compressed mode according to a measurement control message transmitted from the network side. If the measurement control message contains the corresponding information of the compressed mode, for example, if the information of the compressed mode includes a status indication information element used for indicating whether the UE needs to start the compressed mode, and if the status indication information element is Activate, the UE starts the compressed mode when performing the inter-frequency/inter-system measurement. If the measurement message does not contain the information of the compressed mode, or the above status indication information element is Deactivate, the UE does not need to start the compressed mode.

During the specific implementation process, the network side determining whether the UE needs to start the compressed mode when the UE performs the inter-frequency/inter-system measurement may include that: if the multi-frequency measurement capability of the UE meets the requirement of the inter-frequency/inter-system measurement, the UE does not need to start the compressed mode; otherwise, the UE needs to start the compressed mode. Alternatively, if the current wireless quality is relatively good (that is, the wireless quality meets the preset condition, such as that the transmit power of pilot frequency measured is greater than a preset threshold), and the number of multi-frequency measurements for which the UE does not start the compressed mode meets the requirement of the inter-frequency/inter-system measurement, then the number of carriers of multi-frequency measurements is reduced and the compressed mode is not started within the capability scope of the UE.

### Preferred Embodiment 2

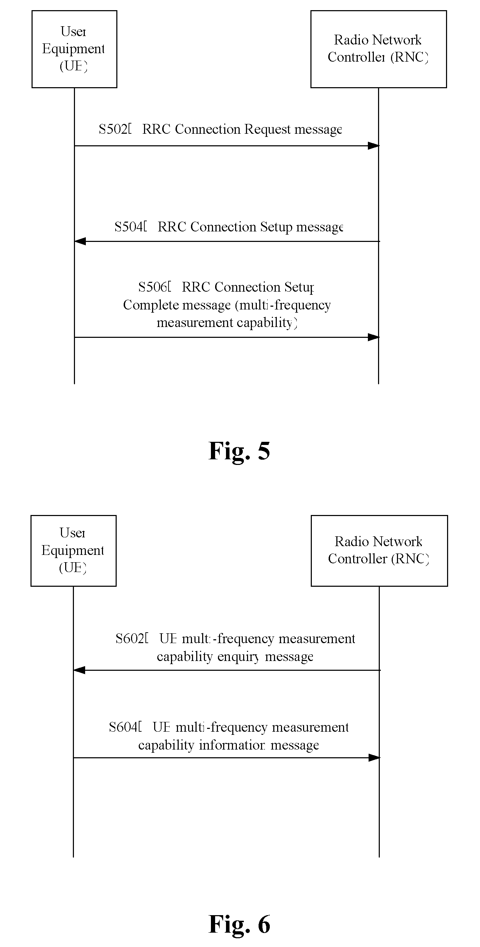

Fig. 5 shows a flowchart of a method for transmitting UE multi-frequency measurement capability according to the preferred Embodiment 2 of the present invention. As shown in Fig. 5, the method includes the following steps.

Step S502: the UE needs to establish a connection with an RNC (that is, the network side) to initiate an RRC Connection Request message.

Step S504: the RNC allocates the resources of RRC stage and sends an RRC Connection Setup message to the UE.

Step S506: the UE establishes the connection successfully and sends an RRC Connection Setup Complete message to the RNC, wherein the message carries an information element of multi-frequency measurement capability indication of the above UE.

### Preferred Embodiment 3

Fig. 6 shows a flowchart of a method for transmitting UE multi-frequency measurement capability according to the preferred Embodiment 3 of the present invention. As shown in Fig. 6, the method includes the following steps.

Step S602: an RNC needs to acquire the multi-frequency measurement capability information of the UE and sends a multi-frequency measurement capability information enquiry (UE Capability Enquiry) request to the UE.

Step S604: the UE sends the multi-frequency measurement capability to the RNC through UE Capability Information, wherein the message carries an information element of multi-frequency measurement capability indication of the UE.

### Preferred Embodiment 4

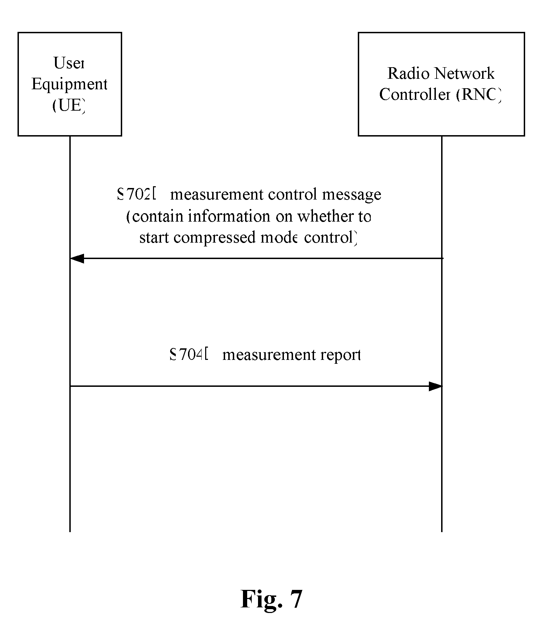

Fig. 7 shows a flowchart of a method of an RNC transmitting a measurement control message according to the preferred Embodiment 4 of the present invention. As shown in Fig. 7, the method includes the following steps.

Step S702: the RNC transmits a measurement control message to a UE based on the multi-frequency measurement capability of the UE, wherein this message carries control information on whether to start a compressed mode.

For example, the RNC determines whether to start the compressed mode and how to configure parameters, based on the multi-frequency measurement capability of the UE. If the multi-frequency measurement capability (the number of carriers of multi-frequency measurement for which the compressed mode is not to be started) reported by the UE meets the requirement of an inter-frequency/inter-system measurement, it is not needed to start the compressed mode. Otherwise, it is needed to start the compressed mode. Alternatively, when the wireless quality is relatively good, even if the number of carriers of multi-frequency measurement for which the compressed mode is not to be started reported by the UE meets the requirement of the inter-frequency/inter-system measurement, the number of carriers of multi-frequency measurements is reduced and the compressed mode is not started within the capability scope of the UE.

During the specific implementation process, whether to start the compressed mode can be controlled by whether to include an information element of DPCH Compressed Mode Status Info in the measurement control message. If the UE is required to start the compressed mode, then the related information of the compressed mode is included in the message. The related information can be the reconfiguration connection frame number of transmission gap pattern sequence, the identifier of transmission gap pattern sequence, the status indication of transmission gap pattern sequence etc.

Step S704: the UE determines whether to start the compressed mode according to the measurement control message, performs the corresponding measurement and reports the measurement when the report condition is satisfied.

During the specific implementation process, if the measurement control message includes the information of the compressed mode, then, for example, the UE can judge the value of the status indication information element (for example, the status indication information element is the status indication of transmission gap pattern sequence) in the information of the compressed mode. If the value of the status indication information element is Activate, the UE starts the compressed mode when performing the inter-frequency/inter-system measurement. If the measurement message does not contain the information of the compressed mode, or the value of the status indication information element is Deactivate, the UE does not need to start the compressed mode. Examples are provided below to describe the corresponding processes of the UE according to uplink carrier, downlink carrier and multi-carrier measurement capability of the UE when the inter-frequency/inter-system measurement is performed, in the condition that the UE determines that the network side indicates the UE not to start the compressed mode.

Example 1, when downlink has 4 frequencies and uplink has 2 frequencies: on the premise that the UE supports simultaneous measurement of 3 frequencies, it is not needed to start the compressed mode for 1 of the downlink sub-frequencies other than the downlink sub-frequencies corresponding to the uplink sub-cells (that is, auxiliary carriers) when performing the inter-frequency measurement; and on the premise that the UE supports simultaneous measurement of 4 frequencies, it is not needed to start the compressed mode for 2 of the downlink sub-frequencies other than the downlink sub-frequencies corresponding to the uplink sub-cells when performing the inter-frequency measurement.

Example 2, when downlink has 3 frequencies and uplink has 2 frequencies: on the premise that the UE supports simultaneous measurement of 3 frequencies, it is not needed to start the compressed mode for one of the downlink sub-frequencies other than the downlink sub-frequencies corresponding to the uplink sub-cells when performing the inter-frequency measurement.

Example 3, when downlink has 4 frequencies and uplink has 1 frequency: on the premise that the UE supports simultaneous measurement of 3 frequencies, it is not needed to start the compressed mode for 2 of the downlink sub-frequencies when performing the inter-frequency measurement; and on the premise that the UE supports simultaneous measurement of 4 frequencies, it is not needed to start the compressed mode for 3 of the downlink sub-frequencies other than the downlink sub-frequency corresponding to the uplink sub-cell when performing the inter-frequency measurement.

Example 4, when downlink has 3 frequencies and uplink has 1 frequency: on the premise that the UE supports simultaneous measurement of 3 frequencies, it is not needed to start the compressed mode for two of the downlink sub-frequencies other than the downlink sub-frequency corresponding to the uplink sub-cell when performing the inter-frequency measurement.

From the above conditions, it can be seen that the UE can determine the number N of downlink auxiliary carriers for which the compressed mode is not to be started, according to the number of carriers of simultaneous multi-carrier measurement supported by the UE and the number of uplink carriers. And, the UE does not start the compressed mode for N downlink auxiliary carriers of the downlink auxiliary carriers other than the downlink auxiliary carriers corresponding to the uplink auxiliary carriers.

It should be noted that the above conditions in the preferred embodiments are only examples, and the present invention is mot limited to these. The scope of protection of the present invention includes all the techniques which determines the number N of downlink auxiliary carriers for which the compressed mode is not to be started according to the number of carriers of simultaneous multi-carrier measurement supported by the UE and the number of uplink carriers. For example, N can satisfy the following formula: N=M-K, wherein M represents the number of carriers of simultaneous multi-carrier measurement supported by the UE, and K represents the number of uplink carriers.

In conclusion, the embodiments of the present invention relates to the Multi-Carrier HSDPA technique. When the UE needs to perform the inter-frequency/inter-system measurement, the network side can control the UE to start or not to start the compressed mode according to the acquired multi-frequency measurement capability of the UE. Thus, the utilization ratio of system resources is increased and the system performance is improved.

### Industrial Applicability

The technical scheme of the present invention considers the problem that the system can not change the serving cell in time when the UE performs the inter-frequency/inter-system measurement in the Multi-Carrier HSDPA technique. The technical scheme adopts the method that the UE is controlled not to start the compressed mode for the downlink auxiliary carriers other than the downlink auxiliary carriers corresponding to the uplink auxiliary carriers. Thus, the utilization ratio of system resources is increased and the performance of the entire system is optimized.

Obviously, those skilled in the art should understand that the modules or steps described above can be implemented by a common computer device. The modules or steps can be integrated on a single computing device or distributed on a network composed of a plurality of computing devices. Optionally, the modules or steps can be implemented by a programming code executable by a computing device. Thus they can be stored in a storage device to be executed by a computing device and executed in a different order in some cases, or manufactured into individual integrated circuit module respectively, or several of them can be manufactured into a single integrated circuit module to implement. In this way, the present invention is not limited to any combination of specific hardware and software.

The above is only the preferred embodiments of the present invention and is not intended to limit the present invention. For those skilled in the art, various modifications and changes can be made to the present invention. Any modification, equivalent substitute and improvement made within the principle of the present invention are deemed to be included within the scope of protection of the present invention.

## Claims

1. A method for controlling start of a compressed mode, **characterized by** comprising steps of:
when a User Equipment (UE) performs an inter-frequency measurement or an inter-system measurement, the UE determining that a network side indicates the UE not to start the compressed mode,
according to a measurement control message received from the network side; and
the UE not starting the compressed mode for N downlink auxiliary carriers of the downlink auxiliary carriers other than the downlink auxiliary carriers corresponding to uplink auxiliary carriers, wherein N is greater than or equal to 1.

2. The control method according to claim 1, **characterized in that** the UE determines the number N of the downlink auxiliary carriers for which the compressed mode is not to be started, according to the number of carriers of simultaneous multi-carrier measurement supported by the UE and the number of uplink carriers.

3. The control method according to claim 2, **characterized in that** N satisfies a formula of:
N=M-K, wherein M represents the number of the carriers of simultaneous multi-carrier measurement supported by the UE, and K represents the number of the uplink carriers.

4. The control method according to claim 1, **characterized in that** when the number of downlink carriers is 4 and the number of uplink carriers is 2, in a condition that the number of carriers of simultaneous multi-carrier measurement supported by the UE is 3, the UE does not start the compressed mode for 1 downlink auxiliary carrier of the downlink auxiliary carriers other than the downlink auxiliary carriers corresponding to the uplink auxiliary carriers; and in a condition that the number of the carriers of simultaneous multi-carrier measurement supported by the UE is 4, the UE does not start the compressed mode for 2 downlink auxiliary carriers of the downlink auxiliary carriers other than the downlink auxiliary carriers corresponding to the uplink auxiliary carriers.

5. The control method according to claim 1, **characterized in that** when the number of downlink carriers is 3 and the number of uplink carriers is 2, in a condition that the number of carriers of simultaneous multi-carrier measurement supported by the UE is 3, the UE does not start the compressed mode for 1 downlink auxiliary carrier of the downlink auxiliary carriers other than the downlink auxiliary carriers corresponding to the uplink auxiliary carriers.

6. The control method according to claim 1, **characterized in that** when the number of downlink carriers is 4 and the number of uplink carriers is 1, in a condition that the number of carriers of simultaneous multi-carrier measurement supported by the UE is 3, the UE does not start the compressed mode for 2 downlink auxiliary carriers of the downlink auxiliary carriers other than the downlink auxiliary carriers corresponding to the uplink auxiliary carriers; and in the condition that the number of the carriers of simultaneous multi-carrier measurement supported by the UE is 4, the UE does not start the compressed mode for 3 downlink auxiliary carriers of the downlink auxiliary carriers other than the downlink auxiliary carriers corresponding to the uplink auxiliary carriers.

7. The control method according to claim 1, **characterized in that** before the UE determining that the network side indicates the UE not to start the compressed mode according to the measurement control message received from the network side, the method further comprises:
the network side judging whether a multi-carrier measurement capability of the UE meets a requirement of the inter-frequency measurement or the inter-system measurement; and
if yes, the network side indicating the UE not to start the compressed mode through the measurement control message; otherwise, the network side indicating the UE to start the compressed mode through the measurement control message.

8. The control method according to claim 1, **characterized in that** before the UE determining that the network side indicates the UE not to start the compressed mode according to the measurement control message received from the network side, the method further comprises:
in a condition that a wireless quality measured by the UE meets a preset condition, the network side indicating the UE not to start the compressed mode through the measurement control message.

9. The control method according to claim 8, **characterized in that** the wireless quality measured by the UE meets the preset condition comprises:
a transmit power of a pilot frequency measured by the UE being greater than a preset threshold.

10. The control method according to claim 1, **characterized in that** the UE determining that the network side indicates the UE not to start the compressed mode according to the measurement control message received from the network side comprises:
the UE determining that the network side indicates the UE not to start the compressed mode according to information of the compressed mode in the measurement control message, wherein the information of the compressed mode is a Dedicated Physical Channel (DPCH) compressed mode status info information element.

11. The control method according to claim 10, **characterized in that** the UE determining that the network side indicates the UE not to start the compressed mode according to the information of the compressed mode in the measurement control message comprises:
the UE determining that the network side indicates the UE not to start the compressed mode according to value of an indication information element in the information of the compressed mode.

12. The control method according to claim 10, **characterized in that** the DPCH compressed mode status info information element comprises at least one of:
reconfiguration connection frame number of transmission gap pattern sequence, identifier of transmission gap pattern sequence, and status indication of transmission gap pattern sequence.

13. The control method according to any one of claims 1 to 12, **characterized in that** before the UE determining that the network side indicates the UE not to start the compressed mode according to the measurement control message received from the network side, the method further comprises:
the UE reporting the multi-carrier measurement capability to the network side.

14. The control method according to claim 13, **characterized in that** the UE reporting the multi-carrier measurement capability to the network side comprises:
the UE carrying a multi-carrier information element which indicates not to start the compressed mode in a message supporting the multi-carrier capability to report to the network side, wherein the message supporting the multi-carrier capability comprises at least one of: newly added Radio Resource Control (RRC) message, radio network resource connection setup complete message, and radio apparatus capability information message.

15. The control method according to any one of claims 1 to 12, **characterized in that** before the UE determining that the network side indicates the UE not to start the compressed mode according to the measurement control message received from the network side, the method further comprises:
the network side sending a command for querying the multi-carrier measurement capability of the UE to the UE; and
the UE returning the multi-carrier measurement capability of the UE to the network side according to the received command.

16. A system for controlling start of a compressed mode, **characterized by** comprising a User Equipment (UE) and a network side apparatus, wherein the UE comprises:
a first determination module, configured to determine that the network side apparatus indicates the UE not to start the compressed mode according to a measurement control message received from the network side apparatus, when the UE performs an inter-frequency measurement or an inter-system measurement; and
a processing module, configured to not start the compressed mode for N downlink auxiliary carriers of the downlink auxiliary carriers other than the downlink auxiliary carriers corresponding to uplink auxiliary carriers, wherein N is greater than or equal to 1.

17. The control system according to claim 16, **characterized in that** the UE further comprises:
a second determination module, configured to determine the number N of the downlink auxiliary carriers for which the compressed mode is not to be started, according to the number of carriers of simultaneous multi-carrier measurement supported by the UE and the number of uplink carriers.

18. The control system according to claim 17, **characterized in that** the network side apparatus comprises:
a judgment module, configured to judge whether a multi-carrier measurement capability of the UE meets a requirement of the inter-frequency measurement or the inter-system measurement; and
an indication module, configured to indicate the UE not to start the compressed mode through the measurement control message, in a condition that the judgment module judges that the multi-carrier measurement capability of the UE meets the requirement of the inter-frequency measurement or the inter-system measurement, and to indicate the UE to start the compressed mode through the measurement control message, in a condition that the judgment module judges that the multi-carrier measurement capability of the UE does not meet the requirement of the inter-frequency measurement or the inter-system measurement.

19. The control system according to claim 16, **characterized in that** the indication module is further configured to indicate the UE not to start the compressed mode through the measurement control message, in a condition that a transmit power of a pilot frequency measured by the UE is greater than a preset threshold.

20. The control system according to claim 19, **characterized in that** the first determination module is further configured to determine that the network side apparatus indicates the UE not to start the compressed mode according to information of the compressed mode in the measurement control message, wherein the information of the compressed mode is a Dedicated Physical Channel (DPCH) compressed mode status info information element.

21. The control system according to claim 20, **characterized in that** the first determination module is further configured to determine that the network side apparatus indicates the UE not to start the compressed mode according to value of an indication information element in the information of the compressed mode.

22. The control system according to any one of claims 16 to 21, **characterized in that** the UE further comprises:
a report module, configured to report the multi-carrier measurement capability to the network side apparatus.

23. The control system according to claim 22, **characterized in that** the report module is further configured to carry a multi-carrier information element which indicates not to start the compressed mode in a message supporting the multi-carrier capability to report to the network side apparatus, wherein the message supporting the multi-carrier capability comprises at least one of: newly added Radio Resource Control (RRC) message, radio network resource connection setup complete message, and radio apparatus capability information message.

24. The control system according to any one of claims 16 to 21, **characterized in that**
the network side apparatus further comprises: a first sending module, configured to send a command for querying the multi-carrier measurement capability of the UE to the UE; and
the UE further comprises: a second sending module, configured to return the multi-carrier measurement capability of the UE to the network side apparatus according to the received command.

25. The control system according to claim 16, **characterized in that** the network side apparatus is a Radio Network Controller (RNC).
